# EUROPÄISCHE PATENTSCHRIFT

(11) **EP 1 871 698 B1**
(45) Veröffentlichungstag und Bekanntmachung des Hinweises auf die Patenterteilung: **10.06.2009**
(21) Anmeldenummer: 06722812.2
(22) Anmeldetag: 20.04.2006
(51) Int. Cl.: B65G 69/18, B65D 88/56, B65D 90/62

(54) **VORRICHTUNG ZUM ENTLADEN VON SCHÜTTGÜTERN UND SCHÜTTGUTBEHÄLTER HIERFÜR**
DEVICE FOR DISCHARGING BULK MATERIALS AND CORRESPONDING BULK MATERIAL CONTAINER
DISPOSITIF POUR DECHARGER DES MARCHANDISES EN VRAC, ET RESERVOIR DE MARCHANDISES EN VRAC A CET EFFET

(30) Priorität: 21.04.2005 DE 202005006428 U
(43) Veröffentlichungstag der Anmeldung: 02.01.2008
(73) Patentinhaber: Stübner, Eckhardt, 21266 Jesteburg (DE)
(72) Erfinder: Stübner, Eckhardt, 21266 Jesteburg (DE)
(74) Vertreter: Schupfner, Georg
(86) Internationale Anmeldenummer: PCT/DE2006/000694
(87) Internationale Veröffentlichungsnummer: WO 2006/111153

(56) Entgegenhaltungen:
- WO-A-80/01793
- FR-A- 1 462 427
- US-A- 3 731 828
- US-A1- 2003 089 742

## Beschreibung

Die Erfindung bezieht sich auf eine Vorrichtung zum Entladen von Schüttgütern jeglicher Art gemäss dem Oberbegriff des Anspruchs 1 bzw. einen verfahrbaren Schüttgutbehälter gemäß dem Oberbegriff des Anspruchs 17.

Es ist bekannt, Schüttgüter, wie beispielsweise Kohle oder Erze, mit seegängigen Schiffen aus den Gewinnungsländern direkt zu Verarbeitungsorten zu transportieren und dort zu entladen. Wo eine unmittelbare Entladung von Seeschiffen nicht möglich ist, wird in den Seehäfen entladen und der Weitertransport zu den Verarbeitungsorten mit Binnenschiffen oder der Bahn vorgenommen. Auch ein Landtransport mit Bandförderern oder ein Transport mit Lastkraftwagen kommt in Betracht.

Beim Transport von Schüttgütern, die keine unweltschädlichen, oder kaum umweltschädliche Bestandteile aufweisen, wie beispielsweise Kohle, sind sowohl die Verladung als auch der Transport wenig problematisch. Schwierig wird es aber bei Schüttgütern, deren Staub eine die Gesundheit und Umwelt gefährdende Belastung mit sich bringen kann. Hierbei kann es sich um toxische Stoffe handeln oder solche, denen auf Grund Ihres Feinstaubgehalts oder allein wegen der Größe/Form des Staubes toxische Eigenschaften zugeordnet werden. Bei solchen Schüttgütern muss mit großer Sorgfalt darauf geachtet werden, dass kein Staub oder diffundierende Stoffe des Schüttgutes beim Verladen und beim Transport in die Umwelt gelangt.

Es ist Aufgabe der Erfindung, ein Transportbehältnis für Schüttgut zu schaffen, das den Transport vom Verladeort zum Verarbeitungsort kostengünstig und umweltsicher übernimmt und ein unkontrolliertes Austreten von Staub und/oder Flüssigkeiten in die Umwelt beim Be- und insbesondere beim Entladen vermeidet. Das Dokument WO-A- 80/01793 offenbart eine Vorrichtung zum Entladen von Schüttgütern gemäss dem Oberbegriff des Anspruch 1 sowie ein Schüttgutbehälter gemäss dem Oberbegriff des Anspruchs 17. Aufgabe der Erfindung ist es insbesondere Behältnisse zum Transport von Sondermüll, Deponierresten, Chemikalien wie auch Gefahrenstoffen zu schaffen.

Die gestellte Aufgabe ist erfindungsgemäß gelöst durch eine Vorrichtung zum Entladen von Schüttgütern gemäß Anspruch 1 bzw. den Schüttgutbehälter gemäß weiterem unabhängigen Anspruch 17. Bevorzugte Ausführungsformen sind Gegenstand der Unteransprüche und/oder nachfolgend beschrieben.

Die Schüttgüter werden in im wesentlichen staub- und flüssigkeitsdichten Schüttgutbehältern zur Entladestation transportiert, wobei der Schüttgutbehälter eine seitliche und oben schwenkbar gelagerte Entladeklappe aufweist, der Schüttgutbehälter mit der Entladeklappe an einen schwenkbaren Andockrahmen der Entladestation umfassend weiterhin ein Andockgehäuse ankoppelbar ist und der Schüttgutbehälter zusammen mit dem angedockten Andockrahmen um eine im Andockbereich der Entladestation vorgesehene Schwenkachse in eine Entladeschräglage zur Entladung, insbesondere zur vollständigen Entladung, kippbar ist. Flüssigkeiten mit einem Anteil an sedimentierbaren Stoffen sind im Sinne dieser Erfindungen ebenfalls Schüttgüter.

Der Schüttgutbehälter ist in eine Beladestation einbringbar, nachfolgend an einen anderen Ort verfahrbar und in der Entladestation ganz oder teilweise erntleerbar.

Der staubdichte Schüttgutbehälter ist vorzugsweise in einen Containerstandardrahmen montiert. Container mit Standardmaßen sind heute ein universell eingesetztes Transportmittel, zu deren Handhabung vor allem in Seehäfen Hub- und Transportgerät aller Art zur Verfügung steht. Der Einsatz von solchen Normcontainern, insbesondere die 20"-Variante, beschränkt sich hauptsächlich auf den Transport von Stückgütern. Für Flüssigkeiten oder Gase werden Tank-Behälter im Standardcontainermaß genutzt. Für den Einsatz von Schüttgut, insbesonderer in feuchter oder nasser Form, gibt es derzeit kein einheitliches Containermaß. Beim Einsatz eines Schüttgutbehälters mit Containermaß muss aber das Problem gelöst sein, dass auf dem Transportweg kein Staub oder Flüssigkeit austritt, bis das Schüttgut an seinem Entladeort angelangt ist. Ein erster Arbeitsschritt bei einer emissionsfreien Beladung des Schüttgutbehälters ist beispielsweise das Beladen mit einer Teleskopschurre, ggf. unter Verwendung einer Absaugvorrichtung. Der zweite Arbeitsschritt ist der emissionsfreie Transport. Der dritte Arbeitsschritt ist die emissionsfreie Übergabe des Schüttgutes am Entladeort in einen geschlossenen Auffangbehälter oder Auffangbunker.

Nach einer weiteren Ausgestaltung der Erfindung ist vorgesehen, dass im Dach des Schüttgutbehälters mindestens eine Einfüllöffnung vorgesehen ist, durch die, vorzugsweise mittels einer Teleskopschurre, das Schüttgut einfüllbar ist. Diese bewährte Art der Befüllung mit Schüttgütern, die im trockenen Zustand stauben können, eignet sich vortrefflich auch zum Einfüllen von Erzen, gegebenenfalls mit toxischen Anteilen.

Hierzu ist vorgesehen, dass der Schüttgutbehälter für Schüttgüter, die in trockenem Zustand stauben können, beim Andocken mit seinem Rahmen flächenbündig gegen den Andockrahmen so andockt, dass seine hängende Entladeklappe umschlossen wird.

Ist der Schüttgutbehälter gegen den Andockrahmen geschoben, dann legt der äußere Rand des Andockrahmens sich dichtend an den Schüttgutbehälter an, wobei die vorher entsicherte Entladeklappe schwenkbar bleibt. Die damit gebildete Verbundeinheit, bestehend aus dem Schüttgutbehälter, dem Andockrahmen und dem Andockgehäuse, wird dann um den Fußpunkt, d.h. die Schwenkachse dieser Verbundeinheit, angeordnet im Bereich der Verbindungsstelle Schüttgutbehälter Andockrahmen, gekippt. Das Schüttgut rutscht bei sich öffnender Entladeklappe des Schüttgutbehälters in den Entladebunker. Der Vorgang läuft sehr rasch und emissionsfrei, insbesondere staubfrei/staubarm und flüssigkeitsverlustfrei, ab.

Nach einer bevorzugten Ausführungsform ist das Andockgehäuse mit einer Dichtklappe seitlich geschlossen, insbesondere an der strinseitigen Andockseite. Die Dichtklappe ist in/an den Andockrahmen montiert, vorzugsweise außen im Wesentlichen ebenflächig abschließend. Das Andockgehäuse mit Dichtklappe und Andockrahmen schließt den Entladebunker nach oben ab. Die Dichtklappe bleibt zunächst verschlossen, wenn die Entladeklappe des Schüttgutbehälters gegen den Andockrahmen verfahren ist. Die Dichtklappe und die Entladeklappe werden vorzugsweise flächenbündig miteinander lösbar verkoppelt.

Nach einer weiteren Ausgestaltung der Erfindung ist vorgesehen, dass die Entladeklappe und die Dichtklappe beide oben schwenkbar gelagert sind und miteinander nach dem Andocken in abdichtendem Kontakt stehen und beim gemeinsamen Kippen von Schüttgutbehälter und Andockrahmen in flächigem Kontakt miteinander bleibend, parallel zueinander in Öffnungsrichtung aufschwenken. Die oberen Klappen schwenken auf Grund der Schwerkraft auf und das Schüttgut fällt in den Entladebunker.

Nach einer weiteren Ausgestaltung der Erfindung ist vorgesehen, dass die Lagerpunkte des Abhängscharnieres der Dichtklappe des Andockrahmens so verschieblich gelagert sind, dass sie beim Kippen gegen einen Belastungswiderstand unter Aufrechterhalten der kontaktierenden Parallelführung von den Lagerpunkten des Abhängscharnieres der Entladeklappe des Schüttgutbehälters weggedrängt werden.

Die Verschiebung der Lagerpunkte verhindert das Überlappungsbestreben der beiden Klappen beim Kippen. Die Klappen verharren beim Kippen in ihrer parallelen Lage zueinander.

Diese Verschieblichkeit wird nach dieser Ausführungsform dadurch erreicht, dass die Lagerpunkte des Abhängscharniers der Dichtklappe in einer etwa geradlinigen Längsführung des Andockrahmens geführt sind, und dass die Lagerpunkte aus einer Ruhestellung bei angedocktem Schüttgutbehälter beim Kippen mit dem Schüttgutbehälter gegen den Widerstand einer Rückstellfeder von den Lagerpunkten der Entladeklappe weggedrängt werden. Die Lagerpunkte der Dichtklappe werden von der Entladeklappe beim Kippen verschoben und die Rückstellfeder schiebt die Lagerpunkte wieder zurück, wenn die Klappen in ihre vertikale Stellung zurückkehren.

Eine weitere Variante ist derart ausgebildet, dass die Lagerpunkte des Abhängscharnieres der Dichtklappe in einer nach oben gekrümmten Längsführung des Andockrahmens geführt sind, und dass die Lagerpunkte aus einer Ruhestellung bei angedocktem Schüttgutbehälter beim Kippen mit dem Schüttgutbehälter in einen höher gelegenen Teil der Längsführung gedrängt werden, wobei sich die Lagerpunkte von denen der Entladeklappe entfernen. Die Lagerpunkte der Dichtklappe werden von der Entladeklappe beim Kippen verschoben und die Schwerkraft drückt die Lagerpunkte wieder zurück, wenn die Klappen in ihre vertikale Stellung zurückkehren.

Nach einer weiteren Ausgestaltung der Erfindung ist vorgesehen, dass der Schüttgutbehälter im Bodenbereich wannenförmig ausgebildet ist. Damit wird sichergestellt, dass beim Ausschütten keine Schüttgutreste an den Wänden oder Eckbereichen kleben bleiben.

Nach einer weiteren Ausgestaltung der Erfindung ist vorgesehen, dass die Oberfläche der Dichtklappe auf der Andockseite der Entladeklappe mit einem weichen dichtenden Belag versehen ist, etwa einem (Industrie-)Filzbelag. Ein solcher Belag sorgt für ein sattes und verschiebliches Anliegen beider Klappen zueinander.

Nach einer weiteren Ausgestaltung der Erfindung ist vorgesehen, dass die Abdichtung der Entladeklappe des Schüttgutbehälters in der Schließposition innerhalb des Schüttgutbehälteraußenprofils innenliegend angeordnet ist. Die Entladeklappe liegt auf diese Weise sicher gegen Staub- und Flüssigkeitsaustritt an der Schüttgutbehälterinnenwand an. Die außen umlaufende Dichtung der Entladeklappe kann eine Hohlgummi- (drucklos, pneumatisch oder hydraulisch aufblasbar) oder Moosgummidichtung sein, die in der Schließposition an den Schüttgutbehälterinnenwänden anliegt. Solche Dichtungen sorgen für ein staubdichtes Anliegen der Entladeklappe am Schüttgutbehälter.

Nach einer weiteren Ausgestaltung der Erfindung ist vorgesehen, dass der Entladebunker, in den das aus dem Schüttgutbehälter und dem Andockrahmen herausrutschende Schüttgut hineinfällt, mit einer Luftabsaugvorrichtung versehen ist, um in dem Entladebunker zumindest während des Entladevorganges einen Unterdruck zu erzeugen. Der Unterdruck vermeidet, dass beim raschen Einfließen des Schüttgutes in den Entladebunker in ihm ein Überdruck entsteht, der Staubteilchen oder toxischer Dämpfe an Bewegungsfugen vorbei nach außen gelangen lässt.

Nach einer weiteren Ausgestaltung der Erfindung ist vorgesehen, dass eine Absaugvorrichtung vorgesehen ist, mittels der nach dem Zurückkippen von Schüttgutbehälter und Andockrahmen in die horizontale Lage und dem Abdocken des Schüttgutbehälters von dem Andockrahmen die Anlagefläche der Entladeklappe am Schüttgutbehälter und ggf. auch die Dichtklappe von eventuellem Schüttgutstaub oder sonstigem anhaftendem Material befreibar werden. Obwohl an der Entladeklappe des Schüttgutbehälters i.d.R. kein Staub oder sonstiges Material haftet, ist damit eine zusätzliche Sicherheit gegeben für ein emissionsfreies Voneinanderbewegen von Schüttgutbehälter und Andockrahmen.

Vorteilhaft erfolgt das Absaugen nachdem Entladeklappe und Andockrahmen ggf. mit Dichtklappe wieder von einander um einen Abstand d beabstandet sind und der Abstand d von einer Saugvorrichtung ausgefüllt wird, die die Fläche von oben nach unten und zurück absaugt (oder umgekehrt). Die Saugvorrichtung kann mit einer rotierenden Bürste versehen sein, um fester anhaftenden Staub oder anderem anhaftendem Material von den Flächen zu entfernen.

Bevorzugt ruht der Schüttgutbehälter auf einer kippbaren Plattform als Teil der Andockstation. Die Plattform kann dann mit einer vorzugsweise hydraulischen Hebevorrichtung die Verbundeinheit aus Container und Andockgehäuse kippen.

Die Erfindung wird anhand der Zeichnungen, die als ein Beispiel für den Schüttgutbehälter einen Container zeigen, näher erläutert. Es zeigen:
Fig. 1 die Vorrichtung nach der Erfindung mit einem Container, der für eine Befüllung, einen Transport und ein Entleeren von tockenen, feuchten oder nassen Schüttgütern eingerichtet ist, wobei beim Handhaben der Schüttgüter kein Staub des Schüttgutes frei wird. Zum Entleeren dockt der Container an einen ihm zugeordneten Andockrahmen als Teil der Entladestation an,
Fig. 2 den an den Andockrahmen angedockten Container,
Fig. 3 den zusammen mit dem Andockgehäuse in eine Entleerposition gekippten Container,
Fig. 4 eine für das bessere Verständnis verändert dimensionierte Darstellung der für die Entleerung bedeutsamen Teile von Container und Andockrahmen im Andockzustand,
Fig. 5 den Aufbau nach Fig. 4 im zum Entleeren gekippten Zustand, wobei das Dach und die zwei Ladeluken sich auch innerhalb des Containerrahmenmaßes befinden können,
Fig. 6 den Container in Seitenansicht,
Fig. 7 den Container mit zwei Befüllöffnungen in Draufsicht,
Fig. 8 den Container von der Entladestirnseite mit innen liegender Entladeklappe,
Fig. 9 ein Fließschema, das den Einsatz des Containers veranschaulicht.
Fig. 10 eine Ausführungsform der Entladevorrichtung mit winkeligem Anschlagrahmen
Fig. 11 die Dichtung des schwenkbaren Andockgehäuses gegen den ortsfesten Anschlagrahmen (Ausschnitt B der Figur 10)
Fig. 12 die Entladevorrichtung der Figur 10 mit in die Entleerposition gegen den Anschlagrahmen gekipptem Container
Fig. 13 die Dichtung des Andockrahmens gegen die Entladestirnwand, die unteren Dichtungen der Entladeklappe gegen die Containerinnenwand und die unteren Dichtungen der Dichtklappe gegen den Andockrahmen (Ausschnitt C der Figur 10).

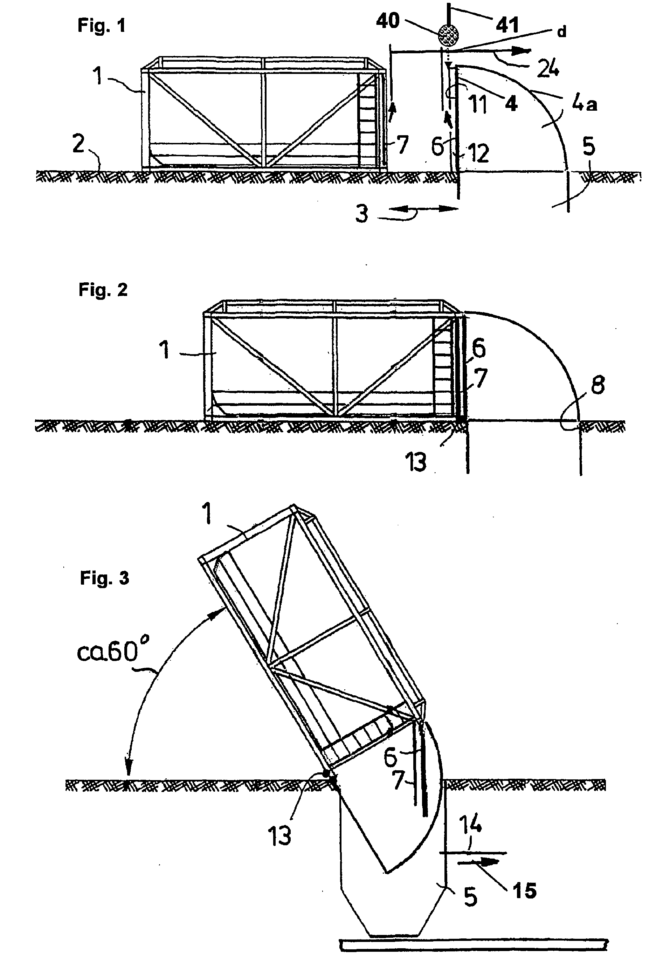

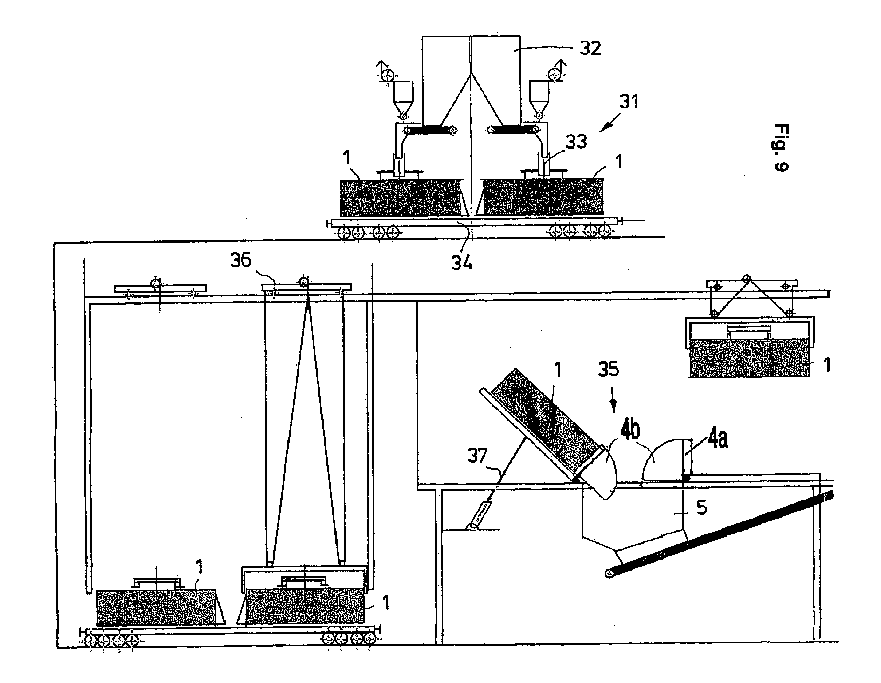

In Fig. 1 ist der zentrale Teil der Vorrichtung mit einem Schüttgutbehälter 1 dargestellt. Im Folgenden wird er als Container 1 bezeichnet. Der Container 1 ruht, wenn er in einer Beladestation 31 mit Schüttgut beladen (Fig. 9) und zur Entladung zur Entladestation 35 gebracht wurde, an der Entladestation 35 auf einer Verschiebefläche 2 und ist auf dieser in Richtung des Doppelpfeiles 3 an einen Andockrahmen 4 heran- und wieder von diesem wegfahrbar. Der Andockrahmen 4 verschließt die Öffnung des Entladebunkers 5. Dazu ist er mit einer oben abgehängten Dichtklappe 6 versehen, die einer Entladeklappe 7 des Containers 1 gegenüber hängt. Auch die Entladeklappe 7 des Containers 1 ist oben abgehängt.

Der Container 1 und der ihm zugeordnete Andockrahmen 4 sind für einen Betrieb geschaffen, bei dem bei der Entleerung in den Bunker 5 keinerlei Emissionspartikel oder Dämpfe des Schüttgutes nach außen treten dürfen. Ein solches Schüttgut ist beispielsweise Eisen- oder Kupfererz. Wegen der zuverlässigen und sicheren Arbeitsweise sind aber Schüttgüter aller Art mit dem Container und Andockrahmen handhabbar, also auch beispielsweise staubende Güter, wie Lebensmittelgrundprodukte, Mehl, Körner, Fischmehl etc. und ausdünstende Chemieprodukte und/oder Abfälle.

Die angedeutete Absaugvorrichtung (24) wird nach dem Zurückkippen des Containers (1) und des Andockgehäuse (4a) in die horizontale Position und dem Abdocken des Containers (1) vom Andockrahmen (4) um die Bürstenbreite d über die Anlagefläche der Entladeklappe 7 am Schüttgutbehälter 1, die Außenfläche der Dichtklappe 6 und ggf. auch den Andockrahmen 4 und die Entladestirnwand 19 flächig verfahren (siehe Pfeilrichtung), wobei die rotierenden Bürsten 40 der Absaugvorrichtung 24 eventuell anhaftenden Schüttgutstaub oder anderes anhaftendes Material abbürsten und über die Saugrohre 41 abführen.

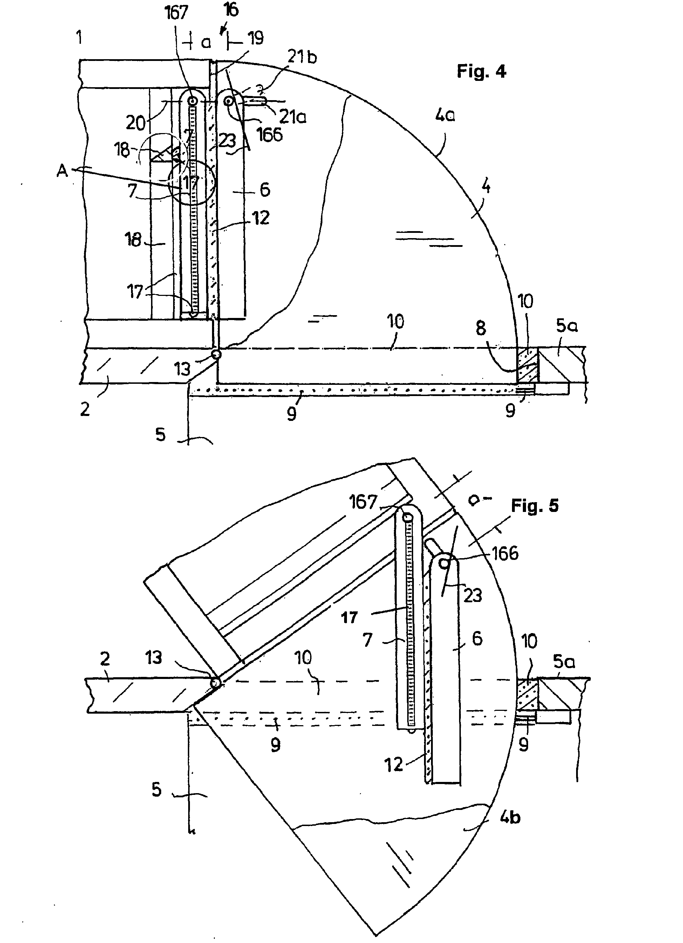

In Fig. 2 ist der Container 1 an den Andockrahmen 4 angedockt. Das bedeutet, dass sich die Entladeklappe 7 und die Dichtklappe 6 aneinander angelegt haben. Der Andockrahmen 4 ist zum Entladebunker 5 hin offen. Gegenüber dem Öffnungsrand 8 des Entladebunkers 5 ist der Andockrahmen 4 mittels Bürsten 9 und Filz 10 abgedichtet. Die Bürsten 9 und der Industriefilz 10 laufen um einen Öffnungsrand 8 in der Decke 5a des Entladebunkers 5 um. Der Filz 10 streift dichtend an der gebogenen Außenwand 4a und den Seitenwänden 4b des Andockrahmens 4 entlang. Die Bürsten 9 streifen Staubpartikel ab. Die Dichtklappe 6 ist auf ihrer Außenseite 11 mit einem Filzbelag 12 versehen. Die Entladeklappe 7 liegt nach dem Andocken an dem Industriefilzbelag 12 der Dichtklappe 6 an. Weitere Einzelheiten dazu werden bei der Beschreibung der Fig. 4 und 5 erläutert.

Zum Entleeren des gefüllten Containers 1 wird die nach dem Andocken gebildete Einheit aus Container 1 und Andockrahmen 4 um eine Schwenkachse 13 gekippt. Der Kippwinkel beträgt etwa 60°. Dies ist in Fig. 3 dargestellt. Dabei fallen die beiden oben abgehängten Klappen, die vorher entriegelte Entladeklappe 7 und die Dichtklappe 6 auf. Sie hängen nun nach unten und das Schüttgut fällt in den Bunker 5. Während des Ausschüttens wird mittels einer Saugleitung 14 in Richtung eines Pfeiles 15 Luft aus dem Entladebunker 5 abgesaugt, um in ihm einen Luftstau zu vermeiden.

Nach dem Ausschütten kippt die Verbundeinheit aus Container 1 und Andockrahmen 4 wieder in die horizontale Stellung zurück. Der Container 1 dockt ab und wird zum neuerlichen Beladen zur Beladestation 31 ( Fig. 9) gebracht.

In den Fig. 4 und 5 ist mit veränderten Dimensionen der Andockbereich 16 von Container 1 und Andockrahmen 4 dargestellt. Dies ist der Bereich, der für eine emissionsfreie Übergabe von ausschlaggebender Bedeutung ist. Der Container 1 ist an den Andockrahmen 4 angedockt. Das bedeutet, dass die Entladeklappe 7 des Containers 1 an der Dichtklappe 6 des Andockrahmens 4 anliegt. Da sich an der Außenseite 11 der Dichtklappe 6 der Industriefilzbelag 12 befindet, schließen die Klappen 6 und 7 den Filzbelag 12 ein.

Man erkennt anhand der Fig. 4 und 5, dass die Klappen 6 und 7 oben an als Lagerpunkte 166, 167 bezeichneten Lagerbolzen von Scharnieren aufgehängt sind. Die Entladeklappe 7 liegt mittels einer Dichtung 17, die eine geeignete Dichtung, wie eine Hohlgummidichtung oder eine Moosgummidichtung sein kann, an der Schüttgutbehälterinnenwand 18 des Containers 1 an. Die Entladeklappe 7 liegt innerhalb der Entladestirnwand 19. Das Zusammenspiel von Schüttgutbehälterinnenwand 18 und Dichtung 17 ist anhand der 90° -Kippung im Ausschnitt A der Fig. 4 zu ersehen. Diese Dichtungsart ist sehr sicher und auch staub- und flüssigkeitsdicht.

Die Lagerpunkte 166 und 167 liegen auf einer Linie 20. In der Andockstellung haben sie einen Abstand a. Eine Besonderheit ist, dass im Lagerpunkt 166 die Lagerbolzen der Entladeklappe 6 beiderseits in Schlitzen 21 a oder 21 b der Andockgehäuseseitenwände 4b geführt sind. Die Schlitze 21 a verlaufen längs der Linie 20. Die Schlitze 21b steigen nach oben an.

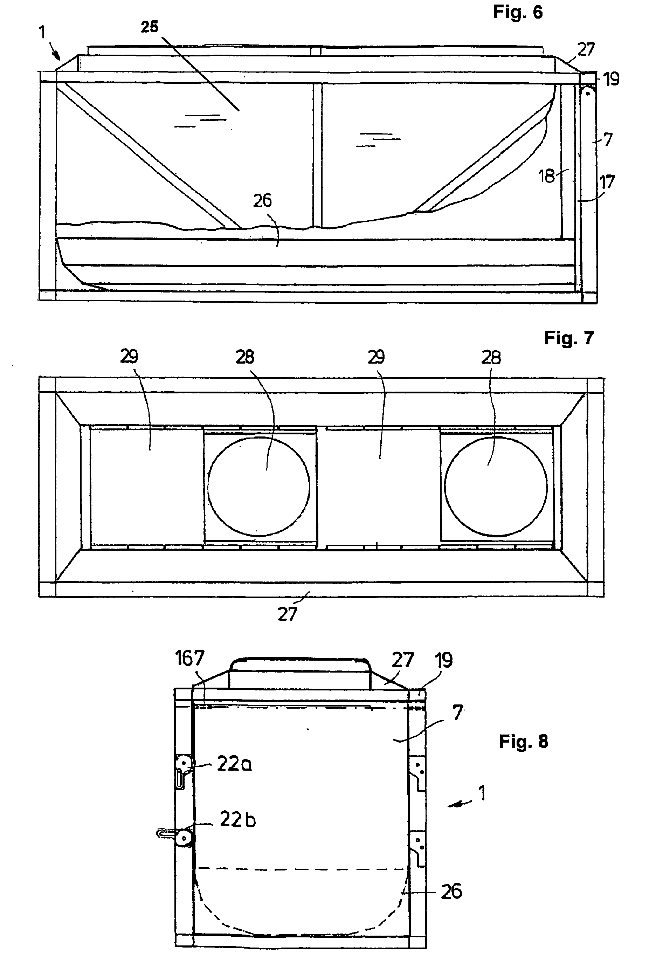

Bis zu dem Andocken des Containers 1 an den Andockrahmen 4 ist die Entladeklappe 7 gegen ein Öffnen gesichert mit Hilfe von Riegeln 22a und 22b, die in Fig. 8 dargestellt sind. Der Riegel 22a zeigt in Fig. 8 die Schließstellung. Der Riegel 22b zeigt die Öffnungsstellung. Vom Andockrahmen aus werden nach dem Andocken die Riegel geöffnet. Nun wird die Verbundeinheit aus Container 1 und Andockrahmen, wie zu Fig. 3 beschrieben, um die Kippachse 13 gekippt. Wie dazu Fig. 5 zeigt, fallen nun die Entladeklappe 7 und die Dichtklappe 6 parallel zueinander auf. Zwischen ihnen liegt der Filzbelag 12. Die Klappen 6 und 7 können sich parallel zueinander bewegen, weil sich die Lagerpunkte 166 der Dichtklappe 6 gegen den Widerstand einer Feder 23 von denen der Entladeklappe 7 entfernen. Der Abstand der Lagerpunkte 166 und 167 hat nun die Länge a'. Bei der anderen Ausführungsform mit dem nach oben gekrümmten Schlitz 21b vergrößert sich der Abstand ebenfalls um die Länge a'.

Das nicht dargestellte Schüttgut fällt nun in den Entladebunker 5. Die in Fig. 3 dargestellte Luftabsaugung verhindert das Entstehen eines Überdruckes im Entladebunker 5. Das ist wichtig, da so vermieden wird, dass Staub oder Dämpfe nach außen gedrückt werden. Ist der Container 1 entleert, dann kippt die Einheit aus Container 1 und Andockrahmen 4 in die horizontale Lage zurück.

Die Feder 23 drückt die Lagerpunkte 166 unter Aufrechterhaltung der Parallelführung der Klappen 6 und 7 zurück. Bei den nach oben gekrümmten Schlitzen drückt das Eigengewicht der Dichtklappe 6 die Lagerpunkte 166 wieder in die Ausgangsstellung mit Abstand a zurück. Die Entladeklappe 7 reibt dabei am Filzbelag 12 entlang und löst eventuelle Staubreste oder anderes anhaftendes Material. Ist die Einheit aus Container 1 und Andockrahmen in die horizontale Stellung zurückgekehrt, dann werden die Riegel 22 wieder geschlossen. Der Container 1 dockt ein Stück ab. Eine Saugvorrichtung 24 saugt zur Sicherheit die Dichtklappe 6, die Entladeklappe 7 und die Entladestirnwand 19 ab. Nun kann der Container 1 zur neuen Beladung weggefahren werden.

Fig. 6 zeigt den Container 1 in Seitenansicht. Ein Teil seiner vorn liegenden Seitenwand 25 ist entfernt. Man erkennt an der rechten Seite die Entladestirnwand 19 mit der innen angedeuteten Entladeklappe 7. Die Entladeklappe 7 liegt mit ihrer Dichtung 17 an der Dichtleiste 18 des Containers 1 an. Der Boden des Containers 1 ist wie eine Wanne 26 ausgebildet, um das Anhaften von Schüttgutresten in Eckbereichen zu vermeiden. Die Wanne 26 ist auch aus Fig. 8 deutlich zu erkennen.

Fig. 7 zeigt das Dach 27 des Containers 1 mit zwei Ladeluken 28 und zwei Lukenverschlüssen 29, wobei sich das Dach 27 und die zwei Ladeluken 28 auch innerhalb des Standardcontainerrahmenmaßes befinden können.

Fig. 9 zeigt anhand eines Fließschemas den Einsatz des Containers 1 mit Andockrahmen 4. In der Beladestation 31 werden aus Zwischenlagerbunkern 32 mittels Teleskopschurren 33 Container 1 so beim Beladevorgang beladen, dass kein Staub oder Dämpfe des Schüttgutes entweichen kann. Die Container 1 stehen auf Tiefbordwagen 34 der Eisenbahn. Es ist selbstverständlich auch möglich, die Container 1 auf LKWs zu laden und zu transportieren.

Die Tiefbordwagen bringen, zusammengestellt zu einem Zug, die Container 1 zu einer Entladestation 35. In der Entladestation 35 werden die Container 1 mittels bekannter Hebezeuge 36 angehoben, über die Verschiebefläche 2 gefahren und auf dieser abgesetzt. Auf der Verschiebefläche 2 docken die Container 1 an die ihnen zugeordneten Andockrahmen 4 an und werden entleert, wie es bereits ausführlich beschrieben ist. Man erkennt eine vorzugsweise hydraulische Hebevorrichtung 37, mittels der die Verbundeinheit aus Container 1, auf eine Plattform als Teil der Andockstation ruhend, und das Andockgehäuse (4b) gekippt werden.

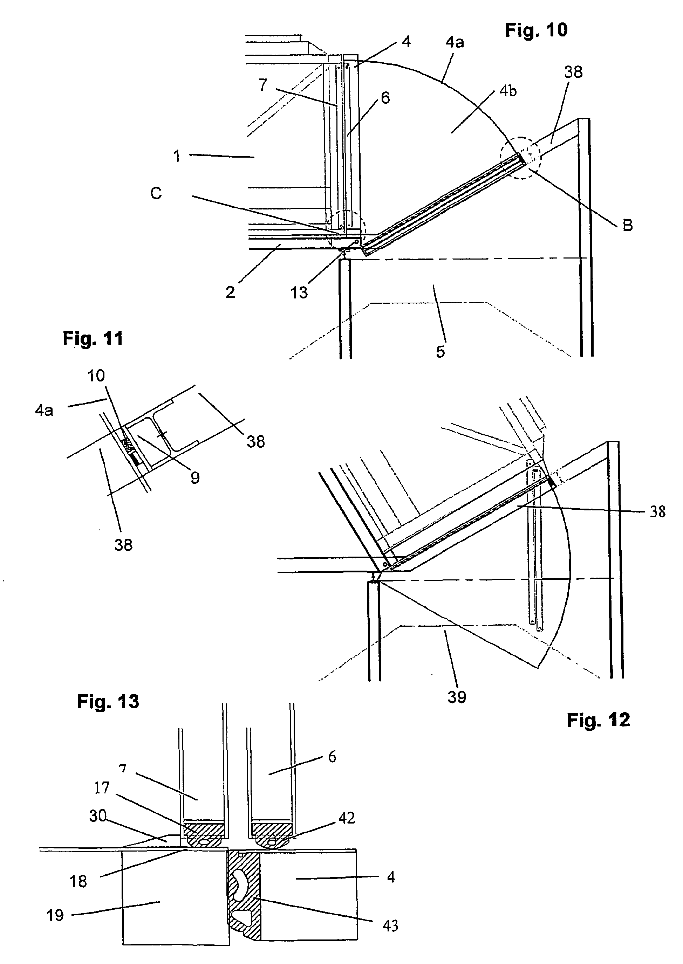

Die Fig. 10 und Fig. 12 zeigen eine bevorzugte Ausführungsform der Erfindung, wonach der Container (1) gegen einen Anschlag (38) kippbar ist und der Anschlag (38) die Entladestirnwand (19) in einem Winkel von 30° gegen die Horizontale in der Kippposition hält. Das Andockgehäuse schließt in der Ruheposition (Fig. 10) mit den Andockgehäuseseitenwänden (4b) umlaufend unten mit den rahmenförmigen Anschlag (38) ab, so dass das Andockgehäuse (4a) in der Kippposition (Fig. 12) weniger tief in den Entladebunker eintaucht als dies in Fig. 3 der Fall ist, wodurch sich ein breitflächigerer Schüttkegel (39) im Entladebunker ausbildet.

Fig. 11 und 13 geben die Ausschnitte (B) und (C) der Fig. 10 vergrößert wieder. Es werden die unterschiedlichen Dichtungen gezeigt. Gut sichtbar ist auch, dass die Entladeklappe (7) (Fig. 13) im Container (1) geführt ist und gegen die Containerinnenwand (18) durch einen Dichtstreifen abgedichtet ist. Ein Anschlag (30) fixiert die Entladeklappe nach Innen. Weiterhin gezeigt sind die Dichtung (42) zwischen Dichtklappe (6) und Andockrahmen (4) und die Dichtung (43) zwischen Andockrahmen (4) und Entladestirnwand (19).

## Patentansprüche

1. Vorrichtung zum Entladen von mit Schüttgütern jeglicher Art gefüllten Schüttgutbehältern (1) aufweisend einen verfahrbaren Schüttgutbehälter (1) und ein Andockgehäuse (4a) mit Andockrahmen (4), wobei der Schüttgutbehälter (1) mit einer oben schwenkbar gelagerten Entladeklappe (7) an den Andockrahmen (4) andockbar ist, um den Andockrahmen (4) abdichtend mit dem Schüttgutbehälter (1) zusammenzuführen, wobei der Schüttgutbehälter (1) und Andockgehäuse (4a) zu einer Einheit verbunden, um eine im Andockbereich (16) vorgesehene Schwenkachse (13) in eine Entladeschräglage kippbar sind, um das Schüttgut durch die sich öffnende Entladeklappe (7) zu entladen, **dadurch gekennzeichnet, dass** der Andockrahmen als Abdeckung eines Entladebunkers (5) angeordnet ist, wobei der Andockrahmen (4) die Entladeklappe (7) dichtend umschließt und das Schüttgut durch die sich öffnende Entladeklappe in den Entladebunker entladet.

2. Vorrichtung nach Anspruch 1, **dadurch gekennzeichnet, dass** der Schüttgutbehälter (1) einen wannenförmigem Bodenraum aufweist und die Entladeklappe (7) vorzugsweise an der Auslassöffnung des wannenförmigem Bodenraums, welche keinen Wannenrand aufweist, angebracht ist.

3. Vorrichtung nach einem der vorhergehenden Ansprüche, **dadurch gekennzeichnet, dass** der Schüttgutbehälter ein allseitig verschließbarer Container (1), insbesondere mit zumindest oben umlaufendem Rahmen, vorzugsweise mit umlaufendem Containerstandardrahmen ist.

4. Vorrichtung nach einem der Ansprüche 1 oder 2, **dadurch gekennzeichnet, dass** der Schüttgutbehälter (1) eine allseitig verschließbare kippbare Lore auf einem Lastkraftwagen oder Schienenfahrzeug ist und die Entladeklappe (7) vorzugsweise am Wagenende an der Lore angebracht ist.

5. Vorrichtung nach einem der vorhergehenden Ansprüche, **dadurch gekennzeichnet, dass** die Entladeklappe (7) des Schüttgutbehälters (1) im angedockten Zustand flächenbündig an eine hängende Dichtklappe (6) des Andockgehäuses (4a) bzw. des Andockrahmens (4) anschließt.

6. Vorrichtung nach Anspruche 5, **dadurch gekennzeichnet, dass** die miteinander in abdichtendem Kontakt stehende Entladeklappe (7) und Dichtklappe (6) so ausgestaltet und aufgehängt sind, dass diese beim gemeinsamen Kippen von Schüttgutbehälter (1) und Andockgehäuse (4a) in flächigem Kontakt miteinander stehend parallel zueinander in Öffnungsrichtung aufschwenken.

7. Vorrichtung nach einem der Ansprüche 5 oder 6 , **dadurch gekennzeichnet, dass** die Dichtklappe (6) ein Abhängscharnier aufweist, wobei die Lagerpunkte (166) des Abhängscharnieres der Dichtklappe (6) des Andockgehäuses (4a) so verschieblich gelagert sind, dass sie beim Kippen gegen einen Belastungswiderstand (23) unter Aufrechterhalten der kontaktierenden Parallelführung von den Lagerpunkten (167) des Abhängscharnieres der Entladeklappe (7) des Schüttgutbehälters (1) weggedrängt werden.

8. Vorrichtung nach einem der Ansprüche 5 bis 7, **dadurch gekennzeichnet, dass** die Dichtklappe (6) ein Abhängscharnier aufweist, wobei die Lagerpunkte (166) des Abhängscharnieres der Dichtklappe(6) in einer in etwa geradlinigen Längsführung (21 a) des Andockrahmens (4) geführt sind, und dass die Lagerpunkte (166) aus ihrer Ruhestellung bei angedocktem Schüttgutbehälter (1) beim Kippen mit dem Schüttgutbehälter (1) gegen den Widerstand einer Rückstellfeder (23) von den Lagerpunkten (167) des Abhängscharnieres der Entladeklappe (7) weggedrängt werden.

9. Vorrichtung nach einem der Ansprüche 5 bis 7, **dadurch gekennzeichnet, dass** die Dichtklappe (6) ein Abhängscharnier aufweist, wobei die Lagerpunkte (166) des Abhängscharnieres der Dichtklappe (6) in einer nach oben gekrümmten Längsführung (21b) des Andockrahmens (4) geführt sind, und dass die Lagerpunkte (166) aus ihrer Ruhestellung bei angedocktem Schüttgutbehälter (1) beim Kippen mit dem Schüttgutbehälter (1) in einen höher gelegenen Teil der Längsführung (21b) gedrängt werden, wobei sich die Lagerpunkte (166) von denen der Entladeklappe (7) entfernen.

10. Vorrichtung nach einem der Ansprüche 5 bis 9, **dadurch gekennzeichnet, dass** die Oberfläche der Dichtklappe (6) auf der Andockseite (11) der Entladeklappe (7) flächig mit einem abdichtenden ggf. weichelastischem Material (12) versehen ist.

11. Vorrichtung nach einem der vorhergehenden Ansprüche, **dadurch gekennzeichnet, dass** die Abdichtung der Entladeklappe (7) des Schüttgutbehälters (1) mit einer außen um die Entladeklappe (7) umlaufenden Dichtung (17) in der Schließposition an der Schüttgutbehälterinnenwand (18) anliegend angeordnet ist.

12. Vorrichtung nach einem der vorhergehenden Ansprüche, **dadurch gekennzeichnet, dass** der Schüttgutbehälter (1) verbunden mit dem Andockgehäuse (4b) in einem Winkel von 20 bis 90°, vorzugsweise 45 bis 75° nach oben schwenkbar ist.

13. Vorrichtung nach einem der vorhergehenden Ansprüche, **dadurch gekennzeichnet, dass** der Entladebunker (5), in den das aus dem Schüttgutbehälter (1) durch den Andockrahmen (4) herausrutschende Schüttgut hineinfällt, mit einer Luftabsaugvorrichtung (14) versehen ist, um in dem Entladebunker (5) einen Unterdruck zu erzeugen.

14. Vorrichtung nach einem der vorhergehenden Ansprüche, **dadurch gekennzeichnet, dass** eine Absaugvorrichtung (24) vorgesehen ist, mittels der nach dem Zurückkippen von Schüttgutbehälter (1) und Andockgehäuse (4a) in die horizontale Lage und dem Abdocken des Schüttgutbehälters (1) von dem Andockrahmen (4) die Anlagefläche der Entladeklappe (7) am Schüttgutbehälter (1) und ggf. auch die Außenfläche der Dichtklappe (6) von eventuellem Schüttgutstaub oder sonstigem anhaftendem Material mittels einer über die Fläche der Klappe(n) verfahrbaren Saug- und/oder Bürstvorrichtung (40) befreibar sind.

15. Vorrichtung nach einem der vorhergehenden Ansprüche, **dadurch gekennzeichnet, dass** der Schüttgutbehälter (1) gegen einen Anschlag (38) kippbar ist und der Anschlag (38) die Entladestirnwand (19) vorzugsweise in einem Winkel von 20 bis 45° gegen die Horizontale in einer Position maximalen Kippens fixiert.

16. Vorrichtung nach Anspruch 15, **dadurch gekennzeichnet, dass** der Anschlag (38) ein Rahmen ist, der das schwenkbare Andockgehäuse (4a) zumindest an den beiden Andockgehäuseseitenwänden (4b) umlaufend umschließt und die Seitenstreben des Rahmens (38) vorzugsweise in einem Winkel von 20 bis 45° von der Kippachse ansteigen und das Andockgehäuse (4a) unabhängig im Ruhezustand vorzugsweise nach unten im wesentlichen mit dem umlaufenden Rahmen (3 8) abschließt.

17. Verfahrbarer Schüttgutbehälter (1) mit allseitig umschlossenem Laderaum aufweisend an zumindest einer Seite eine oben schwenkbar gelagerte Entladeklappe (7), **dadurch gekennzeichnet, dass** eine die Entladeklappe (7) außen allseitig umlaufende Andockfläche angeordnet ist, wobei die Entladeklappe (7) und die allseitig umlaufende Andockfläche im verschlossenen Zustand der Entladeklappe (7) ohne Versatz flächig abschließen, die Entladeklappe (7) nach innen mittels Dichtungen gegen die Schüttgutbehälterinnenwand abdichtet.

18. Verfahrbarer Schüttgutbehälter (1) gemäß Anspruch 17, **dadurch gekennzeichnet, dass** die Entladeklappe (7) sich nach unten, vorzugsweise zur Mitte, verjüngt und der Schüttgutbehälterbodenraum sich ebenso wannenförmig verjüngt, vorzugsweise zur Mitte.

19. Verfahrbarer Schüttgutbehälter gemäß Anspruch 17, **dadurch gekennzeichnet, dass** der Schüttgutbehälter (1) von außen verschließbar ist und unabhängig hiervon die Entladeklappe (7) innen gegen Anschläge (30) fixiert ist.

20. Verfahrbarer Schüttgutbehälter gemäß Anspruch 17, **dadurch gekennzeichnet, dass** der Schüttgutbehälter (1) in der Deckenwand zumindest zwei verschließbare Befüllöffnungen aufweist.

21. Verfahrbarer Schüttgutbehälter gemäß Anspruch 17, **dadurch gekennzeichnet, dass** der Schüttgutbehälterbodenraum sich wannenförmig zur Mitte verjüngt ohne Innenwandfläche des Schüttgutbehälterbodenraums mit vertikalen Anteilen zur Entladeklappe (7) hin.

22. Verfahrbarer Schüttgutbehälter gemäß Anspruch 17 oder Vorrichtung gemäß zumindest einem der Ansprüche 1 bis 16, **dadurch gekennzeichnet, dass** der Schüttgutbehälter auf einem weiteren Schüttgutbehälter gleicher Bauart stapelbar ist, insbesondere auf einem zumindest oben um den Schüttgutbehälter umlaufenden Rahmen des weiteren Schüttgutbehälter gleicher Bauart aufstehend.

23. Verfahrbarer Schüttgutbehälter gemäß Anspruch 17 oder Vorrichtung gemäß zumindest einem der Ansprüche 1 bis 4, **dadurch gekennzeichnet, dass** im Dach (27) des Schüttgutbehälters mindestens eine, vorzugsweise mindestens zwei, Einfüllöffnungen (28) mit Verschlussdeckel (29) vorgesehen sind, vorzugsweise mit einem durch Verschieben zu öffnenden und zu verschließenden Verschlussdeckel (29), durch die das Schüttgut einfüllbar ist.

## Claims

1. A device for discharging bulk material containers (1) filled with bulk materials of any type, comprising a movable bulk material container (1) and a docking housing (4a) with docking frame (4), wherein the bulk material container (1) can be docked onto the docking frame (4) with an upwardly pivotally mounted discharging flap (7), in order to bring the docking frame (4) sealingly together with the bulk material container (1), wherein the bulk material container (1) and the docking housing (4a) are connected to form a unit, are tiltable into an oblique discharging position about a pivot axis (13) provided in the docking area (16), in order to discharge the bulk material through the opening discharging flap (7), **characterised in that** the docking frame is arranged as a cover of a discharging bunker (5), wherein the docking frame (4) sealingly encloses the discharging flap (7) and the bulk material is dischargeable through the opening discharging flap into the discharging bunker.

2. Device according to claim 1, **characterised in that** the bulk material container (1) comprises a trough-shaped bottom compartment and the discharging flap (7) is preferably attached to the outlet opening of the trough-shaped bottom compartment, which cpmprises no trough edge.

3. Device according to any one of the preceding claims, **characterised in that** the bulk material container is a container (1) which can be closed on all sides, in particular with a peripheral frame at least at the top, preferably with a peripheral container standard frame.

4. Device according to any one of claims 1 or 2, **characterised in that** the bulk material container (1) is a tiltable tipper which can be closed on all sides on a lorry or rail vehicle and the discharging flap (7) is preferably attached to the wagon end on the tipper.

5. Device according to any one of the preceding claims, **characterised in that** in the docked state the discharging flap (7) of the bulk material container (1) adjoins to a suspended sealing flap (6) of the docking housing (4a) or the docking frame (4) in flush manner.

6. Device according to claim 5, **characterised in that** the discharging flap (7) and the sealing flap (6) in sealing contact with one another are configured and suspended in such a manner that during the joint tipping of bulk material container (1) and docking housing (4a), these pivot parallel to one another, in surface contact with one another, in the opening direction.

7. Device according to any one of claims 5 or 6, **characterised in that** the sealing flap (6) has a hanging hinge, wherein the mounting points (166) of the hanging hinge of the sealing flap (6) of the docking housing (4a) are displaceably mounted so that during tilting they are forced away against a loading resistance (23) whilst maintaining the contacting parallel guidance from the mounting points (167) of the hanging hinge of the discharging flap (7) of the bulk material container (1).

8. Device according to any one of claims 5 to 7, **characterised in that** the sealing flap (6) has a hanging hinge, wherein the mounting points (166) of the hanging hinge of the sealing flap (6) are guided in an approximately rectilinear longitudinal guide (21) of the docking frame (4) and that the mounting points (166) are forced away from their rest position at the docked bulk material container (1) during tilting with the bulk goods container (1) against the resistance of a restoring spring (23) from the mounting points (167) of the hanging hinge of the discharging flap (7).

9. Device according to any one of claims 5 to 7, **characterised in that** the sealing flap (6) has a hanging hinge, wherein the mounting points (166) of the hanging hinge of the sealing flap (6) are guided in an upwardly curved longitudinal guide (21 b) of the docking frame (4) and that the mounting points (166) are forced from their rest position at the docked bulk material container (1) during tilting with the bulk material container (1) into a higher part of the longitudinal guide (21b), wherein the mounting points (166) move away from those of the discharging flap (7).

10. Device according to any one of claims 5 to 9, **characterised in that** the surface of the sealing flap (6) on the docking side (11) of the discharging flap (7) is provided in two dimensions with a sealing material (12), optionally soft elastic sealing material (12).

11. Device according to any one of the preceding claims, **characterised in that** the seal of the discharging flap (7) of the bulk material container (1) is arranged to abut with a seal (17) running externally around the discharging flap (7) in the closed position on the bulk material container inner wall (18).

12. Device according to any one of the preceding claims, **characterised in that** the bulk material container (7) connected to the docking housing (4b) is upwardly pivotable at an angle of 20 to 90°, preferably 45 to 75°.

13. Device according to any one of the preceding claims, **characterised in that** the discharging bunker (5) into which bulk material sliding out from the bulk material container (7) through the docking frame (4) falls, is provided with an air extraction device (14) in order to produce an underpressure in the discharging bunker (5).

14. Device according to any one of the preceding claims, **characterised in that** an extraction device (24) is provided by which means, after tilting back the bulk material container (1) and docking housing (4a) into the horizontal position and undocking the bulk material container (1) from the docking frame (4), the contact surface of the discharging flap (7) on the bulk material container (1) and optionally also the outer surface of the sealing flap (6) can be freed from any bulk material dust or other adhering material by means of a suction and/or brush device (40) which is movable over the surface of the flap(s).

15. Device according to any one of the preceding claims, **characterised in that** the bulk material container (1) can be tilted against a stop (38) and the stop (38) fixes the discharging front wall (19) preferably at an angle of 20 to 45° with respect to the horizontal in a position of maximum tilt.

16. Device according to claim 15, **characterised in that** the stop (38) is a frame which peripherally encloses the pivotable docking housing (4a) at least at the two docking housing side walls (4b) and the side struts of the frame (38) preferably ascend at an angle of 20 to 45° from the tilt axis and the bottom of the docking housing (4a), being independent in the rest state, preferably terminates substantially with the peripheral frame (38).

17. A movable bulk material container (1) with a loading compartment enclosed on all sides having an upwardly pivotally mounting discharging flap (7) at least on one side, **characterised in that** a docking surface outwardly encircling the discharging flap (7) on all sides is provided, wherein the discharging flap (7) and the all-round encircling docking surface terminate flat without offset in the closed state of the discharging flap (7), the discharging flap (7) seals inwards by means of sealing against the bulk material container inner wall.

18. Movable bulk material container (1) according to claim 17, **characterised in that** the discharging flap (7) tapers downwards, preferably towards the centre and the bulk material container bottom compartment also tapers in a trough shape, preferably towards the centre.

19. Movable bulk material container according to claim 17, **characterised in that** the bulk material container (1) can be closed from the outside and independently hereof the discharging flap (7) is fixed inwardly against stops (30).

20. Movable bulk material container according to claim 17, **characterised in that** the bulk material container (1) has at least two closable filling openings in the ceiling wall.

21. Movable bulk material container according to claim 17, **characterised in that** the bulk material container bottom compartment tapers in a trough shape towards the centre without inner wall surface of the bulk material container bottom compartment with vertical sections towards the discharging flap (7).

22. Movable bulk material container according to claim 17 or device according to at least one of claims 1 to 16, **characterised in that** the bulk material container can be stacked on another bulk material container of the same type, in particular standing on a frame of the other bulk material container of the same design, which encircles the bulk material container at least at the top.

23. Movable bulk material container according to claim 17 or device according to at least one of claims 1 to 4, **characterised in that** at least one, preferably two filling openings (28) with closure lid (29) are provided in the roof (27) of the bulk material container, preferably having a closure lid (29) to be opened and closed by sliding, through which the bulk material can be dumped.

## Revendications

1. Dispositif pour décharger des conteneurs (1) de produits en vrac remplis de produits en vrac de toute sorte comprenant un conteneur (1) de produits en vrac mobile et un caisson de raccordement (4a) avec châssis de raccordement (4), le conteneur (1) de produits en vrac pouvant être raccordé au châssis de raccordement (4) à l'aide d'une trappe de déchargement (7) articulée en haut pour mettre en contact étanche le châssis de raccordement (4) sur le conteneur (1) de produits en vrac, le conteneur (1) de produits en vrac et le caisson de raccordement (4a) formant une unité pour être pivotée autour d'un axe d'articulation (13) prévu dans la zone de raccordement (16) afin de décharger les produits en vrac à travers la trappe de déchargement (7) qui s'ouvre alors, **caractérisé en ce que** le châssis de raccordement est disposé en tant que recouvrement d'une trémie de déchargement (5), le châssis de raccordement (4) renfermant la trappe de déchargement (7) de manière étanche et déchargeant les produits en vrac à travers la trappe de déchargement (7) qui s'ouvre alors dans la trémie de déchargement.

2. Dispositif selon la revendication 1 **caractérisé en ce que** le conteneur (1) de produits en vrac comporte un compartiment de fond en forme de cuvette et **en ce que** la trappe de déchargement (7) est montée de préférence à l'ouverture de sortie du compartiment de fond en forme de cuvette qui ne comporte pas de bord de cuvette.

3. Dispositif selon l'une quelconque des revendications précédentes **caractérisé en ce que** le conteneur (1) de produits en vrac est un conteneur (1) fermant de tous côtés notamment avec châssis périphérique en haut et de préférence avec châssis de conteneur périphérique standard.

4. Dispositif selon l'une des revendications 1 ou 2 **caractérisé en ce que** le conteneur (1) de produits en vrac est une benne basculante fermant de tous côtés sur un camion ou un véhicule ferroviaire et **en ce que** la trappe de déchargement (7) est fixée de préférence sur la benne à l'extrémité arrière du véhicule.

5. Dispositif selon l'une quelconque des revendications précédentes **caractérisé en ce que** la trappe (7) de déchargement du conteneur (1) de produits en vrac porte en état raccordé en affleurement sur un volet (6) d'étanchéité suspendue du caisson de raccordement (4a) ou du châssis de raccordement (4).

6. Dispositif selon la revendication 5 **caractérisé en ce que** la trappe (7) de déchargement et le volet (6) d'étanchéité qui se trouvent en contact étanche sont réalisés et suspendus de manière qu'ils s'ouvrent lors du basculement commun du conteneur (1) de produits en vrac et du caisson de raccordement (4a) en pivotant en parallèle dans le sens de l'ouverture en étant en contact de surface l'une par rapport à l'autre.

7. Dispositif selon l'une des revendications 5 ou 6 **caractérisé en ce que** le volet (6) d'étanchéité comporte une charnière de décrochage, les points d'articulation (166) de la charnière de décrochage du volet (6) d'étanchéité du caisson de raccordement (4a) étant articulés de façon déplaçable de manière qu'ils soient chassés lors d'un basculement contre une résistance de charge (23) s'éloignant des points d'articulation (167) de la charnière de décrochage de la trappe (7) de déchargement du conteneur (1) de produits en vrac tout en maintenant le guidage parallèle à contact.

8. Dispositif selon l'une des revendications 5 à 7 **caractérisé en ce que** le volet (6) d'étanchéité comporte une charnière de décrochage, les points d'articulation (166) de la charnière de décrochage du volet (6) d'étanchéité étant guidés dans un guidage longitudinal (21a) sensiblement droit du châssis de raccordement (4) et **en ce que** les points d'articulation (166) sont chassés au moment du basculement du conteneur (1) de produits en vrac de leurs positions de repos occupées lorsque le conteneur (1) de produits en vrac est raccordé contre la résistance d'un ressort de rappel (23) s'éloignant des points d'articulation (167) de la charnière de décrochage de la trappe (7) de déchargement.

9. Dispositif selon l'une des revendications 5 à 7 **caractérisé en ce que** le volet (6) d'étanchéité comporte une charnière de décrochage, les points d'articulation (166) de la charnière de décrochage du volet (6) d'étanchéité étant guidés dans un guidage longitudinal (21 b) du châssis de raccordement (4) recourbé vers le haut et **en ce que** les points d'articulation (166) sont chassés au moment du basculement du conteneur (1) de produits en vrac de leurs positions de repos occupées lorsque le conteneur (1) de produits en vrac est raccordé dans une partie du guidage longitudinal (21b) située plus haut, les points d'articulation (166) s'éloignant alors de ceux de la trappe (7) de déchargement.

10. Dispositif selon l'une des revendications 5 à 9 **caractérisé en ce que** la surface du volet (6) d'étanchéité du côté de raccordement (11) de la trappe (7) de déchargement est pourvue de manière surfacique d'un matériau d'étanchéité (12) étant, le cas échéant, souple et élastique.

11. Dispositif selon l'une quelconque des revendications précédentes **caractérisé en ce que** l'étanchéité de la trappe (7) de déchargement du conteneur (1) de produits en vrac est réalisée en disposant un joint (17) parcourant l'extérieur de la périphérie de la trappe (7) de déchargement portant en position de fermeture sur la paroi intérieure (18) du conteneur de produits en vrac.

12. Dispositif selon l'une quelconque des revendications précédentes **caractérisé en ce que** le conteneur (1) de produits en vrac relié au caisson de raccordement (4b) peut être pivoté d'un angle de 20 à 90° et de préférence de 45 à 75° vers le haut.

13. Dispositif selon l'une quelconque des revendications précédentes **caractérisé en ce que** la trémie de déchargement (5) dans laquelle tombent les produits en vrac glissant en provenance du conteneur (1) de produits en vrac à travers le châssis de raccordement (4) est pourvu d'un dispositif d'aspiration d'air (14) pour créer une dépression dans la trémie de déchargement (5).

14. Dispositif selon l'une quelconque des revendications précédentes **caractérisé en ce qu'**on prévoit un dispositif d'aspiration (24) à l'aide duquel il est possible de nettoyer, après le rebasculement du conteneur (1) de produits en vrac et du caisson de raccordement (4a) dans la position horizontale et après le détachement du conteneur (1) de produits en vrac du châssis de raccordement (4), la surface d'appui de la trappe (7) de déchargement sur le conteneur (1) de produits en vrac et aussi, le cas échéant, la surface extérieur du volet (6) d'étanchéité d'éventuelles poussières de produits en vrac ou d'autres matières adhérant au moyen d'un dispositif d'aspiration et/ou de brossage (40) pouvant être déplacé sur la surface de la trappe/du volet.

15. Dispositif selon l'une quelconque des revendications précédentes **caractérisé en ce que** le conteneur (1) de produits en vrac peut être basculé contre une butée (38) et que la butée (38) immobilise la paroi de déchargement avant (19) en position de basculement maximal de préférence dans un angle de 20 à 45° par rapport à l'horizontale.

16. Dispositif selon la revendication 15 **caractérisé en ce que** la butée (38) est un châssis, qui renferme de manière périphérique le caisson de raccordement (4a) au moins sur les deux parois latérales (4b) du caisson de raccordement et **en ce que** les montants latéraux du châssis (38) montent depuis l'axe de basculement de préférence dans un angle de 20 à 45° et **en ce que** le caisson de raccordement (4a) en position de repos est indépendamment de cela et de préférence vers le bas pour l'essentiel en affleurement avec le châssis (38) périphérique.

17. Conteneur (1) de produits en vrac mobile avec un compartiment de chargement fermé de tous côtés comportant au moins sur un côté une trappe (7) de déchargement articulée en haut, **caractérisé en ce qu'**une surface de raccordement périphérique est disposée tout autour de l'extérieur de la trappe (7) de déchargement, la trappe (7) de déchargement et la surface de raccordement périphérique se recouvrant sans décalage de manière surfacique lorsque la trappe (7) de déchargement est en état fermé, **en ce que** la trappe (7) de déchargement réalise l'étanchéité vers l'intérieur par rapport à la paroi intérieure du conteneur de produits en vrac au moyen de joints.

18. Conteneur (1) de produits en vrac mobile selon la revendication 17, **caractérisé en ce que** la trappe (7) de déchargement se rétrécie vers le bas, de préférence vers le centre, et que le compartiment de fond du conteneur de produits en vrac se rétrécie également en forme de cuvette, de préférence vers le centre.

19. Conteneur (1) de produits en vrac mobile selon la revendication 17, **caractérisé en ce que** le conteneur (1) de produits en vrac peut être fermé de l'extérieur et en que la trappe (7) de déchargement est immobilisée à l'intérieur contre des butées (30).

20. Conteneur (1) de produits en vrac mobile selon la revendication 17, **caractérisé en ce que** le conteneur (1) de produits en vrac comporte dans la paroi supérieure au moins deux ouvertures de remplissage pouvant être fermées.

21. Conteneur (1) de produits en vrac mobile selon la revendication 17, **caractérisé en ce que** le compartiment de fond du conteneur de produits en vrac se rétrécie vers le centre en forme de cuvette sans surface de la paroi intérieure du compartiment de fond du conteneur de produits en vrac avec des parties verticales dans le sens de la trappe (7) de déchargement.

22. Conteneur (1) de produits en vrac mobile selon la revendication 17 ou dispositif selon au moins l'une des revendications 1 à 16 **caractérisé en ce que** le conteneur de produits en vrac peut être gerbé sur un autre conteneur de produits en vrac de construction identique, notamment en portant autour du châssis de l'autre conteneur de produits en vrac parcourant en haut la périphérie du conteneur de produits en vrac.

23. Conteneur (1) de produits en vrac mobile selon la revendication 17 ou dispositif selon au moins l'une des revendications 1 à 4 **caractérisé en ce qu'**on prévoit dans le toit (27) du conteneur de produits en vrac au moins une et de préférence au moins deux ouvertures de remplissage (28) avec couvercles de fermeture (29) et de préférence avec un couvercle de fermeture (29) pouvant être fermé et ouvert en poussant, par lesquelles on peut remplir les produits en vrac.
